# EUROPÄISCHE PATENTSCHRIFT

(11) **EP 3 287 565 B1**
(45) Veröffentlichungstag und Bekanntmachung des Hinweises auf die Patenterteilung: **27.05.2020**
(21) Anmeldenummer: 17186717.9
(22) Anmeldetag: 17.08.2017
(51) Int. Cl.: E03C 1/04, B60R 15/00

(54) **ARMATUR UND VERFAHREN ZUM BETREIBEN EINER ARMATUR**
VALVE AND METHOD FOR OPERATING THE SAME
ARMATURE ET PROCÉDÉ DE FONCTIONNEMENT D'UNE ARMATURE

(30) Priorität: 26.08.2016 DE 202016104714 U
(43) Veröffentlichungstag der Anmeldung: 28.02.2018
(73) Patentinhaber: Reich GmbH Regel- und Sicherheitstechnik, 35713 Eschenburg-Wissenbach (DE)
(72) Erfinder: BENDER, Helmuth, 35713 Eschenburg (DE); BENDER, Steffen, 35713 Eschenburg (DE)
(74) Vertreter: Hofstetter, Schurack & Partner

(56) Entgegenhaltungen:
- EP-A1- 1 621 686
- DE-U1- 8 902 766
- DE-U1- 9 116 532
- DE-U1- 9 208 372
- DE-U1-202007 004 832
- US-A- 6 029 699

## Beschreibung

Die Erfindung betrifft eine Armatur, insbesondere für einen Wohnwagen, Caravan, Motorcaravan oder ein Boot, mit einer Kartusche zum Einstellen wenigstens eines Fluidstroms, mit einem mit der Kartusche verbundenen Stellelement, mittels welchem die Kartusche zum Einstellen des wenigstens einen Fluidstroms bewegbar ist, und mit einem in der Armatur angeordneten Schaltelement, zum Aktivieren einer die Armatur mit dem wenigstens einen Fluidstrom versorgenden Fördervorrichtung, wobei das Schaltelement in Einbaulage der Armatur unterhalb der Kartusche angeordnet ist. Die Erfindung betrifft weiterhin ein Verfahren zum Betreiben einer solchen Armatur, insbesondere für einen Wohnwagen, Caravan, Motorcaravan oder ein Boot.
Derartige Armaturen sind weit verbreitet und dem Stand der Technik als bekannt zu entnehmen, wobei es üblich ist, Armaturen zum manuellen Absperren und Einstellen eines Fluidstroms, wie beispielsweise eines Wasserstroms, zu verwenden. Dabei ist zwischen stationär eingesetzten Armaturen, welche beispielsweise in Gebäuden verwendet und damit feststehend sind, und mobilen Armaturen zu unterscheiden. Während bei stationär eingesetzten Armaturen häufig ausreichend Bauraum zur Montage und für den Betrieb der Armaturen zur Verfügung steht, sollten mobil eingesetzte Armaturen aufgrund des meist begrenzten Platzangebots besonders kompakt und leicht ausgestaltet sein.
Die US 6 029 699 A beschreibt einen Wasserhahn für eine Küchenspüle. Dabei ist ein Körper mit verschiedenen Öffnungen zur Verbindung mit einer Heißwasserzufuhrleitung sowie einer Kaltwasserzufuhrleitung vorgesehen. Der Körper umfasst zudem eine Mischkammer zum Mischen von heißem und kaltem Wasser. Zudem ist ein manuelles Ventil vorgesehen, welches mittels eines Ventilbetätigers gesteuert werden kann. Aus der DE 20 2007 004 832 U1 ist eine Befestigungsvorrichtung für eine Wasserarmatur bekannt. Dabei kann ein erstes elektrisches Kontaktelement mit einer Stromquelle und ein zweites elektrisches Kontaktelement mit einem in der Wasserarmatur angeordneten Mikroschalter elektrisch leitend verbunden sein. Der Mikroschalter dient dabei zum Ein- und Ausschalten einer in einem Wasserreservoir angeordneten Tauchpumpe. Die DE 89 02 766 U1 beschreibt eine Armatur in Form eines Schwenkarmes, die in einer Rosette drehbar gelagert ist. In der Rosette befindet sich ein Schaltelement, das mittels einer Nocke des Schwenkarmes geschaltet wird.

Aufgabe der vorliegenden Erfindung ist es, eine besonders kompakte und gleichzeitig besonders ausfallsichere Armatur der eingangs genannten Art und ein entsprechendes Verfahren zum Betreiben einer derartigen Armatur bereitzustellen.

Diese Aufgaben werden durch eine Armatur mit den Merkmalen des Anspruchs 1 und ein Verfahren mit den Merkmalen des Anspruchs 15 gelöst. Vorteilhafte Ausgestaltungen sind in den jeweiligen Unteransprüchen beschrieben.

Die Erfindung geht von einer Armatur mit einer Kartusche zum Einstellen wenigstens eines Fluidstroms, mit einem mit der Kartusche verbundenen Stellelement, mittels welchem die Kartusche zum Einstellen des wenigstens einen Fluidstroms verstellbar ist, und mit einem in der Armatur angeordneten Schaltelement, zum Aktivieren einer die Armatur mit dem wenigstens einen Fluidstrom versorgenden Fördervorrichtung, aus. Das Stellelement kann zur manuellen Verstellung der Kartusche beispielsweise als Handgriff ausgebildet sein, oder mit einem Handgriff gekoppelt sein. Von dem Begriff "Kartusche" sind - neben einer Kartusche als solcher - allgemein Regelelemente, Mischelemente und/oder Absperrelemente umfasst, welche mittels des Stellelements zum Einstellen des Fluidstroms bewegbar sind. Zu diesen Regel-, Misch- und Absperrelementen kann beispielsweise eine zum Absperren eines Fluidstromes ausgebildete und eine Durchgangsöffnung aufweisende Kugel einer als Kugelhahn oder als Kükenhahn ausgebildeten Armatur gehören. Von dem Begriff "Kartusche" ist somit auch ein mittels des Stellelements bewegbarer Ventilteller oder eine Ventilkugel umfasst, um nur einige Beispiele zu nennen. Zusammenfassend kann die Kartusche ein mittels des Stellelements verstellbares Regelelement, Mischelement und/oder Absperrelement sein.

Dabei ist das Schaltelement in Einbaulage der Armatur unterhalb der Kartusche angeordnet. Dies hat den Vorteil, dass die Armatur hierdurch kompakt und gleichzeitig besonders ausfallsicher ausgestaltet werden kann. Dementsprechend kann, anders als bei aus dem Stand der Technik bekannten Systemen, bei welchen das Schaltelement in das Stellelement integriert sein oder neben diesem angeordnet sein kann, eine schlankere und somit kompaktere Ausgestaltung des Stellelements erreicht werden. Weiterhin kann durch die Anordnung unterhalb der Kartusche eine im Vergleich zum Stand der Technik besonders gute Ausnutzung des beispielsweise in einer Längserstreckungsrichtung der Kartusche vorhandenen Bauraums der Armatur erreicht werden. Die Betätigung des Schaltelements kann damit an einem von dem Stellelement beabstandeten Bereich der Armatur erfolgen. Dies geht auch mit dem Vorteil einher, dass eine etwaige Benetzung des Schaltelements mit dem Fluidstrom, also beispielsweise mit Wasser oder einer anderen Flüssigkeit, auf einfache Weise unterbunden werden kann. Die Gefahr einer derartigen Benetzung - beispielsweise in Form von Wasserspritzern - kann zu einem Ausfall des Schaltelements führen und besteht vor allem bei einer Anordnung des Schaltelements im Bereich des Handgriffs oder neben der Kartusche. Durch das Anordnen unterhalb der Kartusche hingegen ist das Schaltelement besonders gut vor unbeabsichtigter Benetzung durch den Fluidstrom geschützt und somit die gesamte Armatur besonders ausfallsicher. Ein weiterer Vorteil besteht darin, dass anders als bei der bekannten Integration des Schaltelements in den Handgriff, eine einfachere Montage erreicht und eine etwaige Gefahr eines Kabelbruchs verringert werden kann. Letzteres ist damit zu begründen, dass das Schaltelement durch dessen Anordnung unterhalb der Kartusche bewegungsfrei an der Armatur gehalten sein kann und nicht permanent mit dem Handgriff mitbewegt wird, was zu einer starken Beanspruchung eines das Schaltelement mit der Fördervorrichtung verbindenden Kabels und schließlich zu einem Kabelbruch führen könnte. Die Fördervorrichtung kann beispielsweise als Tauchpumpe ausgebildet sein, mittels welcher ein Wasserstrom als Fluidstrom förderbar ist. Durch das Anordnen unterhalb der Kartusche kann ein Außengehäuse um die Kartusche auch begrenzungsfrei, also um 360° oder ein Vielfaches von 360° relativ zu der Kartusche drehbar ausgebildet sein, wobei eine Kabelbewegung des Kabels, beispielsweise in Form eines Aufwickelns des Kabels um eine Längsachse der Kartusche, wirksam unterbunden werden kann. Durch die Möglichkeit, das Außengehäuse beliebig um die Kartusche zu drehen, kann die Armatur somit besonders ausfallsicher betrieben werden, ohne eine Beschädigung des Kabels durch dessen Kabelbewegung in Kauf nehmen zu müssen.

Gemäß der Erfindung ist das Schaltelement mittels des Stellelements schaltbar. Dies ist von Vorteil, da mittels des Stellelements sowohl eine Verstellung der Kartusche und damit eine Einstellung des Fluidstroms, als auch ein Zuschalten der Fördervorrichtung durch Schalten des Schaltelements erfolgen kann. Somit kann die Funktionalität des Stellelements auf einfache Weise erhöht werden. Das Schaltelement kann mittels des Stellelements unmittelbar schaltbar und dabei kontaktierbar sein, wodurch eine besonders störungsfreie Betätigung ermöglicht ist.

In einer vorteilhaften Ausgestaltung der erfindungsgemäßen Armatur weist die Kartusche ein erstes Ende und ein in einer Längserstreckungsrichtung der Kartusche angeordnetes, dem ersten Ende gegenüberliegendes, zweites Ende auf, wobei das Stellelement an dem ersten Ende der Kartusche und das Schaltelement in der Längserstreckungsrichtung unterhalb des zweiten Endes angeordnet ist. Dies ist von Vorteil, da ein in der Längserstreckungsrichtung der Kartusche vorhandener Bauraum der Armatur besonders gut genutzt und gleichzeitig das Stellelement besonders kompakt ausgebildet werden kann. Das Schaltelement kann damit in der Längserstreckungsrichtung hinter dem zweiten Ende der Kartusche angeordnet sein. Mit anderen Worten kann also das zweite Ende der Kartusche in Bezug auf die Längserstreckungsrichtung zwischen dem ersten Ende der Kartusche und dem Schaltelement angeordnet sein.

In einer weiteren vorteilhaften Ausgestaltung der erfindungsgemäßen Armatur ist wenigstens ein Betätigungselement vorgesehen, welches durch Ausüben einer Kraft mittels des Stellelements und relativ zu der Kartusche in der Längserstreckungsrichtung von einer Nichtgebrauchsposition in wenigstens eine Betätigungsposition bewegbar ist und unter dessen Vermittlung das Schaltelement mittels des Stellelements zumindest in der wenigstens einen Betätigungsposition schaltbar ist. Dies ist von Vorteil, da mittels des Betätigungselements eine besonders einfache Führung der Kraft entlang der Armatur ermöglicht ist. Durch das Betätigungselement ist die Kraft in der Längserstreckungsrichtung an der Kartusche vorbei führbar. Dadurch kann eine besonders günstige Verteilung der Kraft und damit eine gleichmäßige Belastung der Armatur erreicht werden, wodurch die Gefahr eines Verklemmens einzelner Komponenten der Armatur verringert werden kann. Das Betätigungselement kann beispielsweise als Stößel ausgebildet sein. Das Betätigungselement kann unter der Ausübung der Kraft auf das Schaltelement zu und damit in Richtung des Schaltelements bewegbar sein und kann schließlich bei Kontakt mit dem Schaltelement eine Druckkraft auf das Schaltelement ausüben, um dieses zu schalten. Das Stellelement kann unter Ausbildung eines Gleitkontakts unmittelbar mit dem Betätigungselement kontaktierbar sein. Das Betätigungselement kann wiederum unter Ausbildung eines weiteren Gleitkontaktes unmittelbar mit dem Schaltelement kontaktiertbar sein. Durch die jeweiligen Gleitkontakte kann ein gegenseitiges Verklemmen zwischen dem Stellelement und dem Betätigungselement, bzw. zwischen dem Betätigungselement und dem Schaltelement zumindest weitgehend unterbunden werden. Durch das Ausbilden eines derartigen, "unmittelbaren Gleitkontaktes" kann zudem eine besonders störungsfreie Betätigung aufgrund einer besonders geringen Anzahl an Bauteilen ermöglicht werden. Alternativ dazu ist auch ein berührungsloses Schalten des Schaltelements durch das Betätigungselement denkbar, wodurch ein besonders verschleißfreies Aktivieren der Fördervorrichtung ermöglicht ist. Hierzu kann das Betätigungselement und zusätzlich oder alternativ das Schaltelement beispielsweise magnetisch ausgebildet sein.

In einer weiteren vorteilhaften Ausgestaltung der erfindungsgemäßen Armatur ist ein radialer Versatz zwischen dem Betätigungselement und dem Stellelement vorgesehen. Durch den radialen Versatz besteht eine besonders hohe Gestaltungsfreiheit bei der Ausgestaltung der Armatur. Zudem kann ein vorhandener Bauraum besonders gut genutzt werden.

In einer weiteren vorteilhaften Ausgestaltung der erfindungsgemäßen Armatur ist ein Hebelelement vorgesehen, welches kraftübertragend mit dem Stellelement gekoppelt ist und mittels welchem die Kraft über den radialen Versatz hinweg auf das Betätigungselement übertragbar ist. Dies ist von Vorteil, da mittels des Hebelelements auf besonders einfache Weise eine Kraftübersetzung ermöglicht ist, wodurch das Betätigungselement unter verringertem manuellem Aufwand bewegbar sein kann. Das Stellelement und das Hebelelement können beispielsweise über einen gemeinsamen Formschluss, einen gemeinsamen Kraftschluss und zusätzlich oder alternativ über einen gemeinsamen Stoffschluss miteinander verbunden sein. Das Stellelement und das Hebelelement können somit auch einteilig ausgebildet sein. Hierbei kann das Stellelement einen Hebelbereich aufweisen, welcher die Funktion des Hebelelements übernehmen kann.

In einer weiteren vorteilhaften Ausgestaltung der erfindungsgemäßen Armatur bilden das Hebelelement und das Betätigungselement beim Übertragen der Kraft einen Gleitkontakt miteinander. Dies ist von Vorteil, da durch den Gleitkontakt ein etwaiges Verkanten zwischen dem Hebelelement und dem Betätigungselement weitgehend vermieden werden kann und auch Fertigungstoleranzen, welche bei der Herstellung der Armatur auftreten können, auf einfache Weise ausgeglichen werden können.

In einer weiteren vorteilhaften Ausgestaltung der erfindungsgemäßen Armatur weist das Hebelelement in einer Sperrstellung des Stellelements, in welcher der Fluidstrom blockiert ist, einen Abstand zu dem Betätigungselement auf. Dadurch kann in der Sperrstellung ein etwaiger Verschleiß durch Reibung zwischen dem Hebelelement und dem Betätigungselement vermieden werden. Dementsprechend reicht zur Bewegung des Stellelements in dessen Sperrstellung eine besonders geringe Stellkraft aus.

In einer weiteren vorteilhaften Ausgestaltung der erfindungsgemäßen Armatur weist das Betätigungselement in der Längserstreckungsrichtung eine größere Länge auf, als die Kartusche. Dies ist von Vorteil, da durch die größere Länge des Betätigungselements ein vorhandener Bauraum besonders gut genutzt werden kann. Zudem kann ein die Armatur in einer senkrecht zur Längserstreckung orientierten Quererstreckungsrichtung verbreiterndes, seitliches Anordnen des Schaltelements an der Kartusche besonders einfach vermieden werden.

In einer weiteren vorteilhaften Ausgestaltung der erfindungsgemäßen Armatur ist das Betätigungselement einerseits mit der Kartusche und andererseits mit einem Hohlkörper der Armatur, in welchem die Kartusche aufgenommen ist, spielfrei oder unter Ausbildung einer Spielpassung in Anlage. Dies ist von Vorteil, da somit das Betätigungselement bei dessen Bewegung besonders dicht entlang der Kartusche und entlang des Hohlkörpers geführt ist, wodurch eine besonders platzsparende Führung der Kraft an der Kartusche vorbei ermöglicht ist.

In einer weiteren vorteilhaften Ausgestaltung der erfindungsgemäßen Armatur ist das Betätigungselement als Rahmenelement ausgebildet und wenigstens ein Hohlkörperbereich des Hohlkörpers greift in eine Öffnung des Betätigungselements ein, wobei das Betätigungselement bei dessen Bewegung mittels des Hohlkörperbereichs geführt ist. Dies ist von Vorteil, da durch die Ausbildung als Rahmenelement und das Eingreifen des Hohlkörperbereichs in die Öffnung ein etwaiges Verkanten des Rahmenelements bei dessen Bewegung zumindest weitgehend unterbunden werden kann. Die Öffnung kann durch zwei Stegbereiche des als Rahmenelement ausgebildeten Betätigungselements zumindest bereichsweise begrenzt sein, wobei das Betätigungselement in der Längserstreckungsrichtung der Kartusche mit den beiden Stegbereichen an dem Hohlkörperbereich entlanggleiten kann. Dadurch kann das Betätigungselement auch beispielsweise außermittig mit der Kraft beaufschlagt werden, ohne dass es zu einem Verkanten kommt.

In einer weiteren vorteilhaften Ausgestaltung der erfindungsgemäßen Armatur weist das Betätigungselement einen kreisringsegmentförmigen Anlagebereich auf, auf welchen die Kraft zum Bewegen des Betätigungselements ausübbar ist. Dies ist von Vorteil, da der kreissegmentförmige Anlagebereich ein Ausüben der Kraft auf das Betätigungselement auch bei einer relativen Verdrehung des Stellelements zu dem Betätigungselement ermöglicht. Durch die Verdrehung des Stellelements kann beispielsweise eine Mischung mehrerer Fluidströme mit unterschiedlichen Temperaturen eingestellt werden.

In einer weiteren vorteilhaften Ausgestaltung der erfindungsgemäßen Armatur weist der kreisringsegmentförmige Anlagebereich einen Mittelpunktswinkel auf, welcher mindestens genauso groß ist, wie ein Maximalauslenkwinkel um welchen das Stellelement um eine Längsachse der Kartusche zum Einstellen des wenigstens einen Fluidstroms drehbar ist. Dies ist von Vorteil, da auch bei einer maximalen relativen Verdrehung des Stellelements zu dem Betätigungselement ein Ausüben der Kraft auf das Betätigungselement und damit ein Schalten des Schaltelements möglich ist.

In einer weiteren vorteilhaften Ausgestaltung der erfindungsgemäßen Armatur ist wenigstens ein Rückstellelement vorgesehen, mittels welchem das Betätigungselement von der wenigstens einen Betätigungsposition in die Nichtgebrauchsposition bewegbar ist. Dies ist von Vorteil, da hierdurch auch ein Rückstellen des Betätigungselements entgegen der Schwerkraft erfolgen kann. Somit kann auf besonders einfache Weise ein Deaktivieren der Fördervorrichtung sichergestellt werden, indem das Betätigungselement mittels des Rückstellelements in dessen Nichtgebrauchsstellung bewegt wird. Das Rückstellelement kann beispielsweise als Federelement oder als Magnetelement ausgebildet sein. Des Weiteren kann das Rückstellelement einerseits gegenüber dem Hohlkörper und andererseits gegenüber dem Betätigungselement abgestützt sein, wodurch auf einfache Weise sichergestellt werden kann, dass mittels des Rückstellelements eine Bewegung des Betätigungselements von dessen Betätigungsposition in dessen Nichtgebrauchsposition herbeigeführt wird, sobald die Kraft nicht mehr ausgeübt wird.

In einer weiteren vorteilhaften Ausgestaltung ist die Armatur eine Wasserarmatur, insbesondere eine als Einhebelmischer ausgebildete Wasserarmatur. Dies ist von Vorteil, da eine als Einhebelmischer ausgestaltete Armatur einhändig und damit besonders aufwandsarm bedienbar ist.

In einer weiteren vorteilhaften Ausgestaltung der erfindungsgemäßen Armatur ist der Fluidstrom entlang eines Strömungswegs zwischen einer Einströmöffnung der Kartusche und einem Fluidauslass der Armatur führbar, wobei der Strömungsweg in der Einbaulage der Armatur oberhalb des Schaltelements angeordnet ist. Dies ist von Vorteil, da sich dadurch eine besonders einfache Fluidführung mit geringen Strömungsverlusten ergibt. So kann beispielsweise ein - von Systemen aus dem Stand der Technik bekanntes - Verwenden eines Führungskanals zum Führen des Fluidstroms aus der Kartusche heraus und damit entgegen einer Einströmrichtung des Fluidstroms in Richtung der Kartusche entfallen. Durch das Entfallen eines derartigen Führungskanals kann die Armatur schlanker und damit platzsparender ausgebildet werden. Zudem erlaubt ein Entfallen eines solchen Führungskanals eine einfachere Werkzeuggestaltung sowohl eines Montagewerkzeugs zum Montieren der Armatur, als auch eines Herstellwerkzeugs zum Herstellen der Armatur.

Die Erfindung umfasst auch ein Verfahren zum Betreiben einer solchen Armatur, insbesondere für einen Wohnwagen, Caravan, Motorcaravan oder ein Boot, gekennzeichnet durch die Schritte:
- Verstellen der Kartusche mittels des Stellelements zum Einstellen wenigstens eines Fluidstroms durch die Armatur,
- Schalten des in Einbaulage der Armatur unterhalb der Kartusche angeordneten Schaltelements durch das Stellelement und dadurch Aktivieren einer, die Armatur mit dem wenigstens einen Fluidstrom versorgenden, Fördervorrichtung.

Die für die erfindungsgemäße Armatur vorgestellten Aspekte, bevorzugten Ausführungsformen und deren Vorteile gelten entsprechend für das von der Erfindung umfasste Verfahren und umgekehrt.

In einer vorteilhaften Ausführungsform des Verfahrens ist vorgesehen, dass das Schalten des Schaltelements erfolgt, indem mit dem Stellelement eine Kraft auf ein Betätigungselement ausgeübt wird und dadurch ein Bewegen des Betätigungselements in einer Längserstreckungsrichtung der Kartusche von einer Nichtgebrauchsposition in wenigstens eine Betätigungsposition erfolgt, wobei das Betätigungselement das Schaltelement in der Betätigungsposition schaltet.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1a-b: jeweilige Seitenansichten auf eine für die Erfindung beispielhafte Ausführungsform einer Armatur, wobei sich ein zwischen einer Kartusche und einem Hohlkörper aufgenommenes Betätigungselement der Armatur in Fig. 1a in einer Nichtgebrauchsposition und in Fig. 1b in einer Betätigungsposition befindet;
- Fig. 2a-b: jeweils weitere Seitenansichten auf die in Fig. 1a und Fig. 1b gezeigte Armatur in der Nichtgebrauchsposition (Fig. 2a), bzw. in der Betätigungsposition (Fig. 2b), im aus dem Hohlkörper ausgebauten Zustand;
- Fig. 3a-b: jeweilige Schnittdarstellungen durch die in Fig. 1a bzw. Fig. 1b gezeigte Armatur, wobei sich das Betätigungselement in Fig. 3a in der Nichtgebrauchsposition und in Fig. 3b in der Betätigungsposition befindet;
- Fig. 4a-b: jeweilige Perspektivansichten auf die Armatur ohne die Kartusche, wobei sich das Betätigungselement der Armatur in Fig. 4a in der Nichtgebrauchsposition und in Fig. 4b in der Betätigungsposition befindet; und
- Fig. 5a-b: jeweilige Draufsichten auf die Armatur, wobei ein kreisringsegmentförmiger Anlagebereich des Betätigungselements erkennbar ist; und
- Fig. 6: eine weitere Schnittdarstellung der Armatur, wobei beispielhaft ein Verlauf eines Fluidstroms durch die Armatur gezeigt ist.

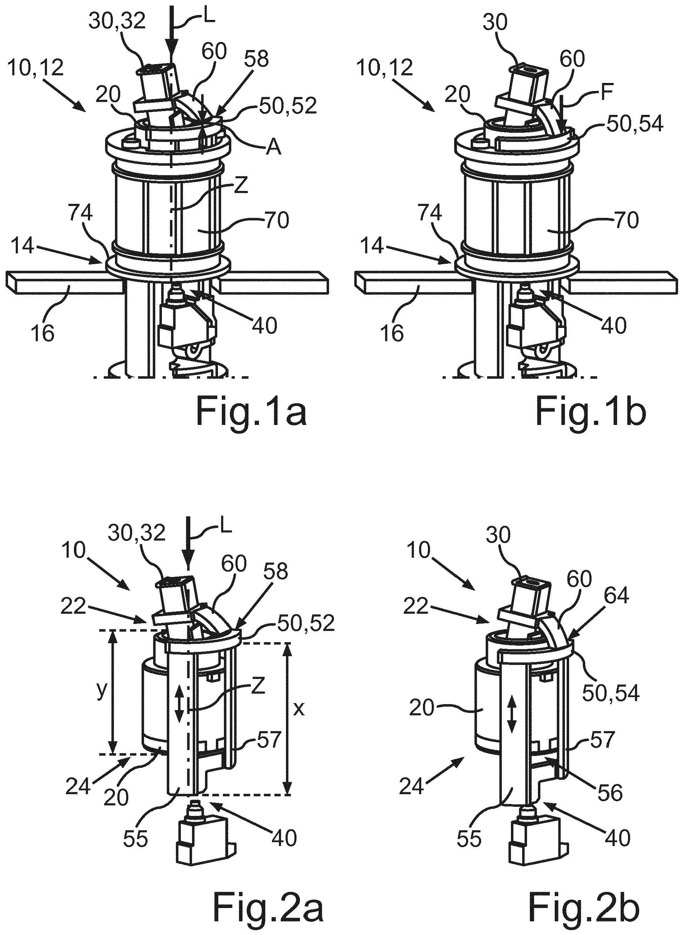

Fig. 1a und Fig. 1b zeigen jeweils eine Armatur 10, in deren Einbaulage 12, in welcher die Armatur 10 im vorliegenden Ausführungsbeispiel an einer hier lediglich schematisch und ausschnittsweise dargestellten Armaturlagerstelle 14 eines Waschbeckens 16 montiert ist. Hierbei ist ein Kragenbereich 74 eines Hohlkörpers 70 der Armatur 10 zur Verdeutlichung der Einbaulage 12 an der Armaturlagerstelle 14 in Anlage. Die Armatur 10 ist vorliegend als Wasserarmatur ausgestaltet und dabei als Einhebelmischer ausgeführt.

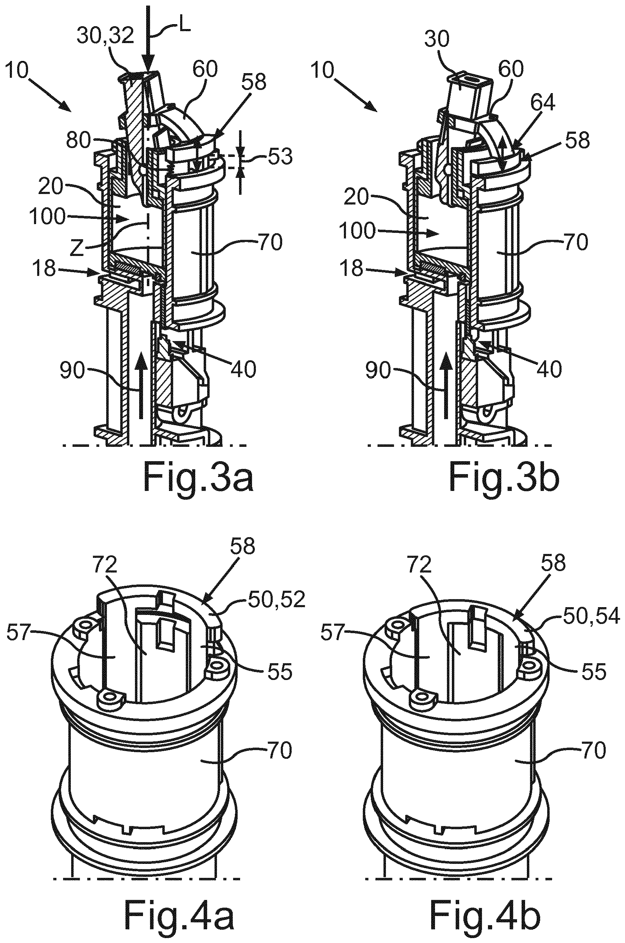

Die Armatur 10 ist besonders kompakt ausgestaltet und mobil einsetzbar, und damit in einem Wohnwagen, Caravan, Motorcaravan oder einem Boot verwendbar. Die Armatur 10 weist eine, vor allem in Fig. 2a und Fig. 2b erkennbare, Kartusche 20 auf, welche zum Einstellen wenigstens eines in jeweiligen Schnittansichten in Fig. 3a und Fig. 3b durch einen Pfeil verdeutlichten Fluidstroms 90 dient.

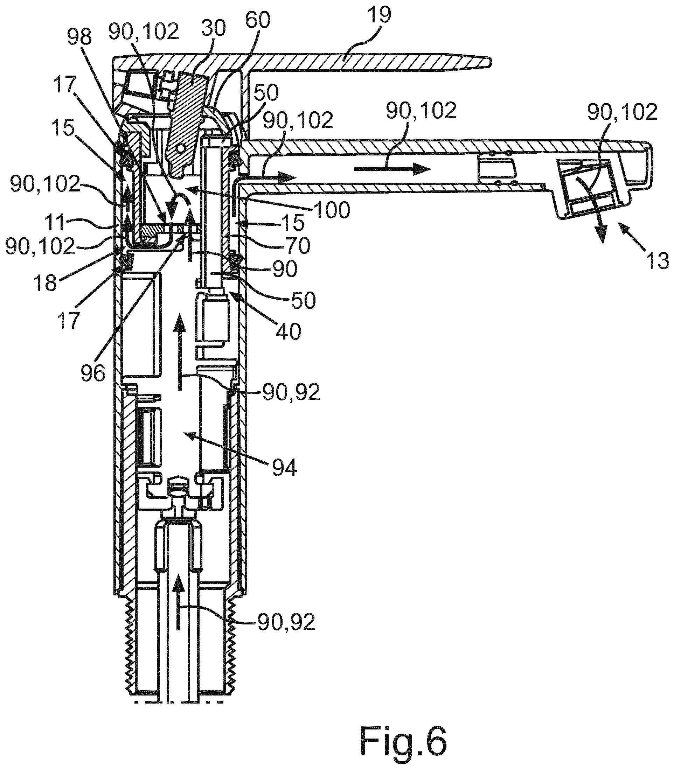

Die Kartusche 20 weist zum Einstellen des Fluidstroms 90 - wie in Fig. 6 gezeigt - wenigstens eine Einströmöffnung 96 über welche der Fluidstrom 90 in einen Kartuschenhohlraum 100 der Kartusche 20 einströmen kann, und wenigstens eine Ausströmöffnung 98, über welche der Fluidstrom 90 aus dem Kartuschenhohlraum 100 austreten kann, auf. Zum Einstellen des Fluidstroms 90 ist die wenigstens eine Einströmöffnung 96 und zusätzlich oder alternativ die wenigstens eine Ausströmöffnung 98 zumindest bereichsweise freigebbar, bzw. verschließbar. Der Fluidstrom 90 ist den Fig. 3a und 3b lediglich exemplarisch dargestellt. Des Weiteren ist aus Gründen der Übersichtlichkeit in den Fig. 3a und 3b ein die Kartusche umgebendes Außengehäuse 11 nicht dargestellt, welches jedoch in Fig. 6 gezeigt ist.

Die Kartusche 20 ist in einem zusammengebauten Zustand der Armatur 10 in dem Hohlkörper 70 aufgenommen, wie aus den Fig. 1a, Fig. 1b, Fig. 3a und Fig. 3b erkennbar ist.

Mit der Kartusche 20 ist ein Stellelement 30 verbunden, mittels welchem die Kartusche 20 zum Einstellen des wenigstens einen Fluidstroms 90 verstellbar ist. Unter der "Verstellbarkeit" der Kartusche 20 ist dabei zu verstehen, dass zumindest hier nicht weiter dargestellte Einstellelemente der Kartusche 20 zum Einstellen des Fluidstroms 90 mittels des Stellelements 30 verstellbar sind, wohingegen andere Kartuschenelemente von der Verstellbarkeit ausgenommen sein können. Bei den Einstellelementen kann es sich beispielsweise um mittels des Stellelements 30 verstellbare, gelochte Keramikscheiben zum Einstellen des Fluidstroms 90 handeln. Das Stellelement 30 ist vorliegend als Zapfen mit einem Vierkantquerschnitt ausgebildet, an welchem ein lediglich in Fig. 6 dargestellter Handhebel 19 zur ergonomischen, manuellen Bedienung des Stellelements 30 und damit der Armatur 10 montiert werden kann. Der Handhebel 19 kann auch als Handgriff bezeichnet werden.

Die Armatur 10 weist des Weiteren ein in dieser angeordnetes Schaltelement 40 auf, welches zum Aktivieren einer die Armatur 10 mit dem wenigstens einen Fluidstrom 90 versorgenden Fördervorrichtung dient. Die Fördervorrichtung ist vorliegend als Wasserpumpe ausgestaltet und hier nicht weiter gezeigt. Das Schaltelement 40 ist in den Fig. 1a bis Fig. 3b dargestellt und vorliegend als Druckschalter ausgebildet. Das Schaltelement 40 ist vorliegend mittels des Stellelements 30 durch Ausüben einer Kraft F (siehe Fig. 1b) schaltbar.

Das Schaltelement 40 ist in Einbaulage 12 der Armatur 10 unterhalb der Kartusche 20 angeordnet (siehe Fig. 1a und Fig. 1b), wodurch das Schaltelement 40 besonders gut vor einer etwaigen Benetzung mit Wasser (Fluidstrom 90) geschützt ist. Des Weiteren ist das Schaltelement 40 unterhalb der Kartusche 20 und damit unterhalb der Armaturlagerstelle 14 des Waschbeckens 16 fixiert. Dadurch können Verschleißerscheinungen, beispielsweise in Form eines Kabelbruchs an hier nicht weiter gezeigten Kabeln des Schaltelements 40, zumindest weitgehend unterbunden werden.

Die Kartusche 20 weist ein erstes Ende 22 und ein in einer Längserstreckungsrichtung L der Kartusche 20 angeordnetes, dem ersten Ende 22 gegenüberliegendes, zweites Ende 24 auf, wobei das Stellelement 30 an dem ersten Ende 22 der Kartusche 20 und das Schaltelement 40 in der Längserstreckungsrichtung L unterhalb des zweiten Endes 24 angeordnet ist, wie insbesondere in Fig. 2a gezeigt ist. Mit anderen Worten ist das zweite Ende 24 in Bezug auf die Längserstreckungsrichtung L zwischen dem ersten Ende 22 und dem Schaltelement 40 angeordnet.

Des Weiteren ist ein Betätigungselement 50 vorgesehen, welches im vorliegenden Ausführungsbeispiel als Stößel ausgebildet ist. Das Betätigungselement 50 ist durch Ausüben der Kraft F mittels des Stellelements 30 und relativ zu der Kartusche 20 in der Längserstreckungsrichtung L von einer vor allem in den Fig. 1a und Fig. 4a erkennbaren Nichtgebrauchsposition 52 in eine vor allem in Fig. 1b und Fig. 4b erkennbare Betätigungsposition 54 bewegbar. In der Nichtgebrauchsposition 52 liegt ein, in Fig. 3a gezeigter, Endlagenabstand 53 zwischen einem kreisringsegmentförmigen Anlagebereich 58 des Betätigungselements 50 und dem Hohlkörper 70 vor. Der Endlagenabstand 53 ist in der Betätigungsposition 54 im Vergleich zu der Nichtgebrauchsposition 52 verkleinert, wie aus der Zusammenschau von Fig. 3a mit Fig. 3b hervorgeht. Der Anlagebereich 58 kann in der Betätigungsposition 54 auch, wie in Fig. 3b besonders gut erkennbar ist, mit dem Hohlkörper 70 in Anlage sein, wodurch der Endlagenabstand 53 den Wert "0" annimmt. Auf den kreisringsegmentförmigen Anlagebereich 58 ist die Kraft F zum Bewegen des Betätigungselements 50 von dessen Nichtgebrauchsposition 52 in die Betätigungsposition 54 ausübbar. In der Betätigungsposition 54 erfolgt vorliegend ein Einschalten der hier nicht dargestellten Fördervorrichtung durch Betätigen des Schaltelements 40 mittels des Betätigungselements 50, wodurch der Fluidstrom 90 durch die Armatur 10 gefördert wird.

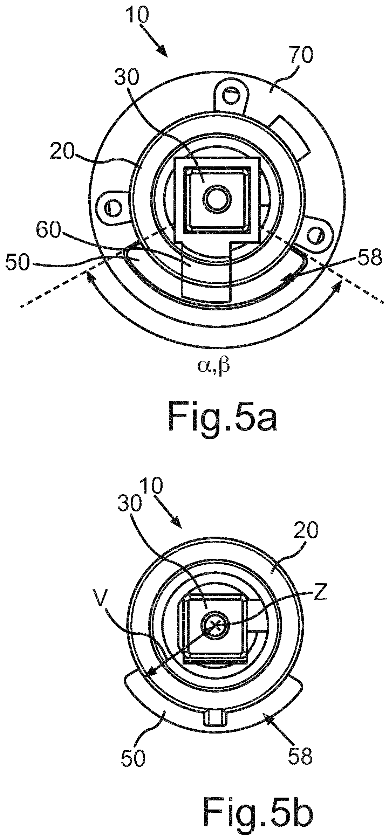

Fig. 5a und Fig. 5b verdeutlichen, dass der kreisringsegmentförmige Anlagebereich 58 einen Mittelpunktswinkel α aufweist, welcher vorliegend genauso groß ist, wie ein Maximalauslenkwinkel β um welchen das Stellelement 30 um eine Längsachse Z der Kartusche 20 zum Einstellen des Fluidstroms 90 drehbar ist. Durch Drehen des Stellelements 30 um die Längsachse Z oder eine dazu parallele, hier nicht gezeigte Drehachse kann ein Mischungsverhältnis zwischen dem Fluidstrom 90 und einem weiteren, hier nicht weiter dargestellten, zweiten Fluidstrom eingestellt werden.

Unter Vermittlung des Betätigungselements 50 ist das Schaltelement 40 mittels des Stellelements 30 in der Betätigungsposition 54 schaltbar, indem das Betätigungselement 50 durch Ausüben der Kraft F mittels des Stellelements 30 entlang der Kartusche 20 in der Längserstreckungsrichtung L von der Nichtgebrauchsposition 52 in die Betätigungsposition 54 bewegt wird.

Zwischen dem Betätigungselement 50 und dem Stellelement 30 ist ein radialer Versatz V in einer zu der Längserstreckungsrichtung L senkrechten, jedoch nicht weiter gezeigten Quererstreckungsrichtung, vorgesehen. Dieser Versatz V bemisst sich zwischen einem Lagerstellenmittelpunkt des Stellelements 30 auf der Längsachse Z und einem dem Stellelement zugewandten Randbereich des Anlagebereichs 58 des Betätigungselements 50, wie in Fig. 5b gezeigt ist.

Des Weiteren ist ein Hebelelement 60 vorgesehen, welches kraftübertragend mit dem Stellelement 30 gekoppelt ist und mittels welchem die Kraft F über den radialen Versatz V hinweg auf das Betätigungselement 50 übertragbar ist. Beim Übertragen der Kraft F bilden das Hebelelement 60 und das Betätigungselement 50 einen Gleitkontakt 64 miteinander (siehe Fig. 3b). Mit anderen Worten kann das Hebelelement 60 an einer Kontaktstelle mit dem Anlagebereich 58 abgleiten, während das Betätigungselement 50 in der Längserstreckungsrichtung L bewegt wird. Durch den Gleitkontakt 64 kann auf besonders einfache Weise vermieden werden, dass es zu erhöhten Querkräften zwischen dem zusammen mit dem Stellelement 30 beispielsweise eine Schwenkbewegung durchführenden Hebelelement 60 und dem axial bewegten Betätigungselement 50 kommt.

Das Hebelelement 60 weist in einer in Fig. 1a, Fig. 2a und in Fig. 3a gezeigten Sperrstellung 32 des Stellelements 30, in welcher der Fluidstrom 90 blockiert ist, einen Abstand A zu dem Betätigungselement 50 auf. In der Sperrstellung 32 ist die in Fig. 6 gezeigte, wenigstens eine Einströmöffnung 96 und zusätzlich oder alternativ die wenigstens eine Ausströmöffnung 98 verschlossen, so dass der Fluidstrom 90 blockiert ist.

Des Weiteren weist das Betätigungselement 50 in der Längserstreckungsrichtung L eine Länge x auf, welche größer ist als eine Länge y der Kartusche 20, wie in Fig. 2a gezeigt ist.

Das Betätigungselement 50 ist einerseits mit der Kartusche 20 und andererseits mit dem Hohlkörper 70 der Armatur 10 spielfrei oder unter Ausbildung einer Spielpassung in Anlage. Die spielfreie Anlage hat den Vorteil, dass ein gegebenenfalls als unangenehm empfundenes, durch Schwingungsanregung der Armatur 10, (beispielsweise durch Überfahren eines Schlaglochs mit einem Caravan) erzeugtes Klappern des Betätigungselements 20 zwischen dem Hohlkörper 70 und der Kartusche 20 unterbunden werden kann. Durch eine Spielpassung ist hingegen ein besonders reibungsarmes Bewegen des Betätigungselements 50 möglich.

Das Betätigungselement 50 ist des Weiteren als Rahmenelement ausgebildet, wobei ein Hohlkörperbereich 72 des Hohlkörpers 70 in eine durch jeweilige Stegbereiche 55, 57 des Betätigungselements 50 bereichsweise begrenzte Öffnung 56 des Betätigungselements 50 eingreift, wie in Fig. 4a und Fig. 4b gezeigt ist. Das Betätigungselement 50 ist bei dessen Bewegung von der Nichtgebrauchsposition 52 in die Betätigungsposition 54 und umgekehrt mittels des Hohlkörperbereichs 72 in der Längserstreckungsrichtung L und damit parallel zu der Längsachse Z der Kartusche 20 geführt.

Zudem ist ein lediglich in Fig. 3a gezeigtes Rückstellelement 80 vorgesehen, mittels welchem das Betätigungselement 50 von der Betätigungsposition 54 in die Nichtgebrauchsposition 52 bewegbar ist. Mittels des Rückstellelements 80, welches vorliegend als Federelement ausgebildet ist, kann also eine Betätigung des Schaltelements 40 durch das Betätigungselement 50 unterbrochen und damit die Fördervorrichtung ausgeschaltet werden, sobald das Betätigungselement 50 nicht mehr infolge des Ausübens der Kraft F niedergedrückt wird.

Fig. 6 zeigt nochmals beispielhaft das Führen des Fluidstroms 90 bis zu einem Fluidauslass 13 der Armatur 10, wenn die Betätigungsposition 54 eingestellt ist. Wie aus Fig. 6 erkennbar ist, sind der Hohlkörper 70 und damit die Kartusche 20 zum Fördern des Fluidstroms 90 zu dem Fluidauslass 13 der Armatur 10 in dem Außengehäuse 11 aufgenommen, wobei das Außengehäuse 11 beliebig um die Längsachse Z und damit relativ zu der Kartusche 20 drehbar sein kann. Das Außengehäuse 11 und der Hohlkörper 70 umschließen miteinander bereichsweise einen Fluidraum 15. Der Fluidraum 15 ist vorliegend zumindest im Wesentlichen als den Hohlkörper 70 umgebender Hohlzylinderraum ausgebildet. Des Weiteren ist der Fluidraum 15 über jeweilige, zwischen dem Hohlkörper 70 und dem Außengehäuse 11 angeordnete Dichtlippen 17 gegenüber einem Austreten des Fluidstroms 90 an eine Umgebung der Armatur 10 abgedichtet.

In der Betätigungsposition 54 wird der Fluidstrom 90 mittels der Fördervorrichtung zunächst in einer durch einen vertikalen Pfeil verdeutlichten Einströmrichtung 92 gefördert und strömt damit in vertikaler Richtung entlang eines Einströmkanals 94 der Armatur 10. Der Einströmkanal 94 führt dabei den Fluidstrom 90 an dem Schaltelement 40 vorbei durch die wenigstens eine Einströmöffnung 96 der Kartusche 20 und in den Kartuschenhohlraum 100. Über die wenigstens eine Ausströmöffnung 98 strömt der Fluidstrom 90 aus dem Kartuschenhohlraum 100 in einen, in den Fig. 3a, 3b und insbesondere in Fig. 6 gezeigten Ringspalt 18. Von dem Ringspalt 18 aus strömt der Fluidstrom 90 in den Fluidraum 15 und über diesen zu dem Fluidauslass 13, wo der Fluidstrom 90 aus der Armatur 10 austritt. Die Einströmöffnung 96 und der Fluidauslass 13 stellen vorliegend jeweilige Enden eines Strömungswegs 102 dar, entlang welchem der Fluidstrom 90 führbar ist. Der Strömungsweg 102 ist aus Gründen der Übersichtlichkeit in Fig. 6 zwischen der Einströmöffnung 96 und dem Fluidauslass 13 zusammen mit jeweiligen, den Fluidstrom 90 verdeutlichenden Pfeilen dargestellt. Vorliegend verläuft der Strömungsweg 102 dementsprechend von der Einströmöffnung 96, über den Kartuschenhohlraum 100, die Ausströmöffnung 98, den Fluidraum 15 bis hin zu der Ausströmöffnung 13. Der Fluidstrom 90 ist damit also entlang des Strömungswegs 102 zwischen der Einströmöffnung 96 der Kartusche 20 und dem Fluidauslass 13 der Armatur 10 führbar, wobei der Strömungsweg 102 in der Einbaulage 12 der Armatur 10 oberhalb des Schaltelements 40 angeordnet ist. Mit anderen Worten verläuft der Strömungsweg 102 in der Einbaulage 12 der Armatur 10 oberhalb des Schaltelements 40, was in Fig. 6 besonders deutlich erkennbar ist.

Von der Erfindung umfasst ist auch ein Verfahren zum Betreiben einer Armatur 10, insbesondere für einen Wohnwagen, Caravan, Motorcaravan oder ein Boot, gekennzeichnet durch die Schritte:
- Verstellen einer Kartusche 20 mittels eines Stellelements 30 zum Einstellen wenigstens eines Fluidstroms 90 durch die Armatur 10,
- Schalten eines in Einbaulage 12 der Armatur 10 unterhalb der Kartusche 20 angeordneten Schaltelements 40 durch das Stellelement 30 und dadurch Aktivieren einer, die Armatur 10 mit dem wenigstens einen Fluidstrom versorgenden, Fördervorrichtung.

Die für die erfindungsgemäße Armatur vorgestellten bevorzugten Ausführungsformen und deren Vorteile gelten entsprechend für das von der Erfindung umfasste Verfahren und umgekehrt.

In einer vorteilhaften Ausführungsform des Verfahrens ist vorgesehen, dass das Schalten des Schaltelements 40 erfolgt, indem mit dem Stellelement 30 eine Kraft F auf ein Betätigungselement 50 ausgeübt wird und dadurch ein Bewegen des Betätigungselements 50 in einer Längserstreckungsrichtung L der Kartusche 20 von einer Nichtgebrauchsposition 52 in wenigstens eine Betätigungsposition 54 erfolgt, wobei das Betätigungselement 50 das Schaltelement 40 in der Betätigungsposition 54 schaltet.

Zusammenfassend kann mit der erfindungsgemäßen Armatur 10 ein aus dem Stand der Technik bekanntes Anordnen von Schaltelementen innerhalb eines Handgriffs (Handhebel 19) oder im Bereich des Handgriffes und damit ein Auftreten von Schäden an der Armatur 10 zumindest weitgehend vermieden werden. Zu diesen Schäden zählen erhöhte Korrosionsneigung infolge einer unbeabsichtigten Benetzung des Schaltelements 40 mit einem Fluid oder Kabelbrüche.

Die erfindungsgemäße Armatur 10 ermöglicht auch den Einsatz von sogenannten offenen Schaltern, welche beispielsweise nicht der Schutzklasse 67 entsprechen, und welche bei einer Benetzung mit dem Fluid einer erhöhten Korrosion einer Schaltzunge oder jeweiliger Kontaktverbindungen ausgesetzt wären, zumal durch das Anordnen des Schaltelements 40 unterhalb der Kartusche 20 eine ungewollte Beaufschlagung des Schaltelements 40 mit dem Fluid wirksam vermieden werden kann.

## Patentansprüche

1. Armatur (10), insbesondere für einen Wohnwagen, Caravan, Motorcaravan oder ein Boot,
- mit einer Kartusche (20) zum Einstellen wenigstens eines Fluidstroms (90),
- mit einem mit der Kartusche (20) verbundenen Stellelement (30), mittels welchem die Kartusche (20) zum Einstellen des wenigstens einen Fluidstroms (90) verstellbar ist, und
- mit einem in der Armatur (10) angeordneten Schaltelement (40), zum Aktivieren einer die Armatur (10) mit dem wenigstens einen Fluidstrom (90) versorgenden Fördervorrichtung, wobei das Schaltelement (40) in Einbaulage (12) der Armatur (10) unterhalb der Kartusche (20) angeordnet ist,
**dadurch gekennzeichnet, dass**
das Schaltelement (40) mittels des Stellelements (30) schaltbar ist.

2. Armatur (10) nach Anspruch 1,
**dadurch gekennzeichnet, dass**
die Kartusche (20) ein erstes Ende (22) und ein in einer Längserstreckungsrichtung (L) der Kartusche (20) angeordnetes, dem ersten Ende (22) gegenüberliegendes, zweites Ende (24) aufweist, wobei das Stellelement (30) an dem ersten Ende (22) der Kartusche (20) und das Schaltelement (40) in der Längserstreckungsrichtung (L) unterhalb des zweiten Endes (24) angeordnet ist.

3. Armatur (10) nach Anspruch 2,
**dadurch gekennzeichnet, dass**
wenigstens ein Betätigungselement (50) vorgesehen ist, welches durch Ausüben einer Kraft (F) mittels des Stellelements (30) und relativ zu der Kartusche (20) in der Längserstreckungsrichtung (L) von einer Nichtgebrauchsposition (52) in wenigstens eine Betätigungsposition (54) bewegbar ist und unter dessen Vermittlung das Schaltelement (40) mittels des Stellelements (30) zumindest in der wenigstens einen Betätigungsposition (54) schaltbar ist.

4. Armatur (10) nach Anspruch 3,
**dadurch gekennzeichnet, dass**
ein radialer Versatz (V) zwischen dem Betätigungselement (50) und dem Stellelement (30) vorgesehen ist.

5. Armatur (10) nach Anspruch 4,
**dadurch gekennzeichnet, dass**
ein Hebelelement (60) vorgesehen ist, welches kraftübertragend mit dem Stellelement (30) gekoppelt ist und mittels welchem die Kraft (F) über den radialen Versatz (V) hinweg auf das Betätigungselement (50) übertragbar ist.

6. Armatur (10) nach Anspruch 5,
**dadurch gekennzeichnet, dass**
das Hebelelement (60) und das Betätigungselement (50) beim Übertragen der Kraft (F) einen Gleitkontakt (64) miteinander bilden.

7. Armatur (10) nach Anspruch 5 oder 6,
**dadurch gekennzeichnet, dass**
das Hebelelement (60) in einer Sperrstellung (32) des Stellelements (30), in welcher der Fluidstrom (90) blockiert ist, einen Abstand (A) zu dem Betätigungselement (50) aufweist.

8. Armatur (10) nach einem der Ansprüche 3 bis 7,
**dadurch gekennzeichnet, dass**
das Betätigungselement (50) in der Längserstreckungsrichtung (L) eine größere Länge (x) aufweist, als die Kartusche.

9. Armatur (10) nach einem der Ansprüche 3 bis 8,
**dadurch gekennzeichnet, dass**
das Betätigungselement (50) einerseits mit der Kartusche (20) und andererseits mit einem Hohlkörper (70) der Armatur (10), in welchem die Kartusche (20) aufgenommen ist, spielfrei oder unter Ausbildung einer Spielpassung in Anlage ist.

10. Armatur (10) nach Anspruch 9,
**dadurch gekennzeichnet, dass**
das Betätigungselement (50) als Rahmenelement ausgebildet ist und wenigstens ein Hohlkörperbereich (72) des Hohlkörpers (70) in eine Öffnung (56) des Betätigungselements (50) eingreift, wobei das Betätigungselement (50) bei dessen Bewegung mittels des Hohlkörperbereichs (72) geführt ist.

11. Armatur (10) nach einem der Ansprüche 3 bis 10,
**dadurch gekennzeichnet, dass**
das Betätigungselement (50) einen kreisringsegmentförmigen Anlagebereich (58) aufweist, auf welchen die Kraft (F) zum Bewegen des Betätigungselements (50) ausübbar ist.

12. Armatur (10) nach Anspruch 11,
**dadurch gekennzeichnet, dass**
der kreisringsegmentförmige Anlagebereich (58) einen Mittelpunktswinkel (α) aufweist, welcher mindestens genauso groß ist, wie ein Maximalauslenkwinkel (β) um welchen das Stellelement (30) um eine Längsachse (Z) der Kartusche (20) zum Einstellen des wenigstens einen Fluidstroms (90) drehbar ist.

13. Armatur (10) nach einem der Ansprüche 3 bis 12,
**dadurch gekennzeichnet, dass**
wenigstens ein Rückstellelement (80) vorgesehen ist, mittels welchem das Betätigungselement (50) von der wenigstens einen Betätigungsposition (54) in die Nichtgebrauchsposition (52) bewegbar ist.

14. Armatur (10) nach einem der vorhergehenden Ansprüche,
**dadurch gekennzeichnet, dass**
der Fluidstrom (90) entlang eines Strömungswegs (102) zwischen einer Einströmöffnung (96) der Kartusche (20) und einem Fluidauslass (13) der Armatur (10) führbar ist, wobei der Strömungsweg (102) in der Einbaulage (12) der Armatur (10) oberhalb des Schaltelements (40) angeordnet ist.

15. Verfahren zum Betreiben einer Armatur (10) gemäß einem der Ansprüche 1-14, insbesondere für einen Wohnwagen, Caravan, Motorcaravan oder ein Boot, **gekennzeichnet durch** die Schritte:
- Verstellen der Kartusche (20) mittels des Stellelements (30) zum Einstellen wenigstens eines Fluidstroms (90) durch die Armatur (10),
- Schalten des in einer Einbaulage (12) der Armatur (10) unterhalb der Kartusche (20) angeordneten Schaltelements (40) durch das Stellelement (30) und dadurch Aktivieren einer, die Armatur (10) mit dem wenigstens einen Fluidstrom versorgenden, Fördervorrichtung.

## Claims

1. A fitting (10), in particular for a camper, caravan, motor caravan or boat,
- with a cartridge (20) for setting at least one fluid flow (90),
- with an actuator (30) connected to the cartridge (20), by means of which the cartridge (20) is adjustable for setting the at least one fluid flow (90), and
- with a switching element (40) arranged in the fitting (10) for activating a conveying device supplying the fitting (10) with the at least one fluid flow (90), wherein the switching element (40) is arranged below the cartridge (20) in installation position (12) of the fitting (10),
**characterized in that**
the switching element (40) is switchable by means of the actuator (30).

2. The fitting (10) according to claim 1,
**characterized in that**
the cartridge (20) comprises a first end (22) and a second end (24) opposing the first end (22), arranged in a longitudinal extension direction (L) of the cartridge (20), wherein the actuator (30) is arranged at the first end (22) of the cartridge (20) and the switching element (40) is arranged below the second end (24) in the longitudinal extension direction (L).

3. The fitting (10) according to claim 2,
**characterized in that**
at least one actuating element (50) is provided, which is movable in the longitudinal extension direction (L) from a non-use position (52) into at least one actuating position (54) by exerting a force (F) by means of the actuator (30) and relative to the cartridge (20) and with intervention thereof the switching element (40) is switchable at least in the at least one actuating position (54) by means of the actuator (30).

4. The fitting (10) according to claim 3,
**characterized in that**
a radial offset (V) is provided between the actuating element (50) and the actuator (30).

5. The fitting (10) according to claim 4,
**characterized in that**
a lever element (60) is provided, which is coupled to the actuator (30) in force transmitting manner and by means of which the force (F) can be transmitted to the actuating element (50) over the radial offset (V).

6. The fitting (10) according to claim 5,
**characterized in that**
the lever element (60) and the actuating element (50) form a sliding contact (64) with each other upon transmitting the force (F).

7. The fitting (10) according to claim 5 or 6,
**characterized in that**
the lever element (60) has a distance (A) to the actuating element (50) in a disabling position (32) of the actuator (30), in which the fluid flow (90) is blocked.

8. The fitting (10) according to any one of claims 3 to 7,
**characterized in that**
the actuating element (50) has a larger length (x) than the cartridge in the longitudinal extension direction (L).

9. The fitting (10) according to any one of claims 3 to 8,
**characterized in that**
the actuating element (50) is in abutment with the cartridge (20) on the one hand and with a hollow body (70) of the fitting (10) on the other hand, in which the cartridge (20) is received, without backlash or with formation of a loose fit.

10. The fitting (10) according to claim 9,
**characterized in that**
the actuating element (50) is formed as a frame element and at least one hollow body area (72) of the hollow body (70) engages with an opening (56) of the actuating element (50), wherein the actuating element (50) is guided by means of the hollow body area (72) upon movement thereof.

11. The fitting (10) according to any one of claims 3 to 10,
**characterized in that**
the actuating element (50) has an annular segment-shaped abutment area (58), on which the force (F) for moving the actuating element (50) can be exerted.

12. The fitting (10) according to claim 11,
**characterized in that**
the annular segment-shaped abutment area (58) has a central angle (α), which is at least as large as a maximum deflection angle (β),by which the actuator (30) is rotatable around a longitudinal axis (Z) of the cartridge (20) for setting the at least one fluid flow (90).

13. The fitting (10) according to any one of claims 3 to 12,
**characterized in that**
at least one restoring element (80) is provided, by means of which the actuating element (50) is movable from the at least one actuating position (54) into the non-use position (52).

14. The fitting (10) according to any one of the preceding claims,
**characterized in that**
the fluid flow (90) can be conducted along a flow path (102) between an inflow opening (96) of the cartridge (20) and a fluid outlet (13) of the fitting (10), wherein the flow path (102) is arranged above the switching element (40) in the installation position (12) of the fitting (10).

15. A method for operating a fitting (10) according to any one of claims 1-14, in particular for a camper, caravan, motor caravan or boat, **characterized by** the steps of:
- adjusting the cartridge (20) by means of the actuator (30) for setting at least one fluid flow (90) through the fitting (10),
- switching the switching element (40) arranged below the cartridge (20) in an installation position (12) of the fitting (10) by the actuator (30) and thereby activating a conveying device suppling the fitting (10) with the at least one fluid flow.

## Revendications

1. Robinetterie (10), surtout pour un camping-car, une caravane, une auto-caravane ou un bateau,
- avec une cartouche (20) pour régler au moins un courant de fluide (90),
- avec un actionneur (30) relié à la cartouche (20) au moyen duquel la cartouche (20) est réglable pour régler l'au moins un courant de fluide (90), et
- avec un élément de commutation (40) agencé dans la robinetterie (10) pour activer un dispositif de transport alimentant la robinetterie (10) avec l'au moins un courant de fluide (90), dans lequel l'élément de commutation (40) est agencé en position de montage (12) de la robinetterie (10) en-dessous de la cartouche (20),
**caractérisé en ce que**
l'élément de commutation (40) est commutable au moyen de l'actionneur (30).

2. Robinetterie (10) selon la revendication 1,
**caractérisé en ce que**
la cartouche (20) comporte une première extrémité (22) et une seconde extrémité (22) opposée à la première extrémité (22) et agencée dans une extension longitudinale (L) de la cartouche (20), dans laquelle l'actionneur (30) est agencé à la première extrémité (22) de la cartouche (20) et l'élément de commutation (40) est agencé dans l'extension longitudinale (L) en-dessous de la seconde extrémité (22).

3. Robinetterie (10) selon la revendication 2,
**caractérisé en ce que**
au moins un organe de commande (50) est prévu qui par l'application d'une force (F) est déplaçable au moyen de l'actionneur (30) et relatif à la cartouche (20) dans l'extension longitudinale (L) d'une position de non-utilisation (52) à au moins une position d'actionnement (54) et par l'intermédiaire duquel l'élément de commutation (40) est commutable au moyen de l'actionneur (30) au moins dans l'au moins une position d'actionnement (54).

4. Robinetterie (10) selon la revendication 3,
**caractérisé en ce que**
un déport radial (V) est prévu entre l'organe de commande (50) et l'actionneur (30).

5. Robinetterie (10) selon la revendication 4,
**caractérisé en ce que**
un élément de levier (60) est prévu qui est couplé de façon à transmettre la force à l'actionneur (30) et au moyen duquel la force (F) est transférable au-delà du déport radial (V) à l'organe de commande (50).

6. Robinetterie (10) selon la revendication 5,
**caractérisé en ce que**
l'élément de levier (60) et l'organe de commande (50) lors de la transmission de la force (F) forment un contact glissant entre eux.

7. Robinetterie (10) selon la revendication 5 ou 6,
**caractérisé en ce que**
l'élément de levier (60) dans une position de blocage (32) de l'actionneur (30), dans laquelle le courant de fluide (90) est bloqué, est espacé (A) de l'organe de commande (50).

8. Robinetterie (10) selon l'une quelconque des revendications 3 à 7,
**caractérisé en ce que**
l'organe de commande (50) dans l'extension longitudinale (L) comporte une longueur supérieur (x) à la cartouche.

9. Robinetterie (10) selon l'une quelconque des revendications 3 à 8,
**caractérisé en ce que**
l'organe de commande (50) prend appui sans jeu ou en formant un ajustement avec jeu d'une part avec la cartouche (20) et d'autre part avec un corps creux (70) de la robinetterie (10) dans lequel la cartouche (20) est reçue.

10. Robinetterie (10) selon la revendication 9,
**caractérisé en ce que**
l'organe de commande (50) est formé comme élément de cadre et au moins une zone de corps creux (72) du corps creux (70) s'engage dans une ouverture (56) de l'organe de commande (50) dans lequel l'organe de commande (50) lors de son mouvement est guidé au moyen de la zone de corps creux (72).

11. Robinetterie (10) selon l'une quelconque des revendications 3 à 10,
**caractérisé en ce que**
l'organe de commande (50) comporte une zone d'appui (58) en forme de segment d'anneau circulaire sur laquelle la force (F) pour déplacer l'organe de commande (50) peut être exercée.

12. Robinetterie (10) selon la revendication 11,
**caractérisé en ce que**
la zone d'appui (58) en forme de segment d'anneau circulaire comporte un angle central (α) qui est au moins aussi grand qu'un angle maximal de déviation (β) autour duquel l'actionneur (30) est pivotant autour d'un axe longitudinal (Z) de la cartouche (20) pour régler l'au moins un courant de fluide (90).

13. Robinetterie (10) selon l'une quelconque des revendications 3 à 12,
**caractérisé en ce que**
au moins un élément de rappel (80) est prévu au moyen duquel l'organe de commande (50) est déplaçable de l'au moins une position d'actionnement (54) à la position de non-utilisation (52).

14. Robinetterie (10) selon l'une quelconque des revendications précédentes,
**caractérisé en ce que**
le courant de fluide (90) peut être guidé le long d'un chemin d'écoulement (102) entre un orifice d'admission (96) de la cartouche (20) et une sortie de fluide (13) de la robinetterie (10), dans lequel le chemin d'écoulement (102) dans la position de montage (12) de la robinetterie (10) est agencé au-dessus de l'élément de commutation (40).

15. Procédé de fonctionnement d'une robinetterie (10) selon l'une quelconque des revendications 1 à 14, surtout pour un camping-car, une caravane, une auto-caravane ou un bateau, **caractérisé par** les étapes suivantes:
- régler la cartouche (20) au moyen de l'actionneur (30 pour régler au moins un courant de fluide (90) par la robinetterie (10),
- commuter l'élément de commutation (40) agencé dans une position de montage (12) de la robinetterie (10) en-dessous de la cartouche (20) par l'actionneur (30) et ainsi activer un dispositif de transport alimentant la robinetterie (10) avec l'au moins un courant de fluide (90).
